Europäisches Patentamt

European Patent Office

Office européen des brevets

(19)

(11) Publication number : **0 488 521 A1**

## (12) EUROPEAN PATENT APPLICATION

(21) Application number : 91309868.7

(22) Date of filing : 25.10.91

(51) Int. Cl.$^5$ : **C04B 35/00**, H01B 3/12, H01G 4/12

(30) Priority : 30.11.90 GB 9026113

(43) Date of publication of application :
03.06.92 Bulletin 92/23

(84) Designated Contracting States :
DE FR IT SE

(71) Applicant : GEC-MARCONI LIMITED
The Grove, Warren Lane
Stanmore, Middlesex HA7 4LY (GB)

(72) Inventor : Osbond, Paul Christopher
3 Lawson Crescent
Northampton, Northamptonshire NN3 4NS
(GB)
Inventor : Whatmore, Roger William
21 Tweed Drive
Bletchley, Milton Keynes MK3 7QR (GB)

(74) Representative : Pope, Michael Bertram
Wingate
The General Electric Company, p.l.c., GEC
Patent Dept.(Wembley Office), Hirst Research
Centre, East Lane
Wembley Middlesex HA9 7PP (GB)

(54) A ceramic material.

(57)    The present invention discloses a material having a composition :
$(PbSc_{0.5}Ta_{0.5}O_3)_{100-x}(PbZrO_3)_x$
wherein x is greater than 0 mole % and less than 20 mole %. The method of producing such ceramic materials comprises producing a mixture of predetermined quantities of $(PbSc_{0.5}Ta_{0.5}O_3)$ and $PbZrO_3)$ and calcining the mixture to form said composition.

EP 0 488 521 A1

The invention relates to a ceramic material and a method of producing such materials.

There are large numbers of ceramic compositions which exhibit very large dielectic constants (> 20000); the ferroelectric to paraelectric phase transitions for these materials are diffuse and show 'relaxor'-like behaviour (ie. dispersion of the dielectric constant and loss as a function of frequency). These relaxor materials are often suitable candidates for multilayer capacitors where larger capacitances per unit volume are required. However, a diffuse transition in the dielectric constant is unsuitable for applications such as high performance dielectric bolometers-the sensors used in uncooled thermal imaging systems. For this latter application, a large change in dielectric constant with change in temperature is required, with the peak in dielectric constant occurring at a temperature relatively close to the ambient conditions.

According to the invention there is provided a ceramic material having a composition:

$$(PbSc_{0.5}Ta_{0.5}O_3)_{100-x}(PbZrO_3)_x$$

wherein x is greater than 0 mole % and less than 20 mole %.

Further, according to the invention there is provided a method of producing a ceramic material as claimed in Claim 1, the method comprising producing a mixture of predetermined quantities of $(PbSc_{0.5}Ta_{0.5}O_3)$ and $PbZrO_3)$, (hereafter referred to as PST and PZ respectively) and calcining the mixture to form said composition.

This invention provides ceramic metal oxide dielectrics which exhibit sharp peaks in their relative permittivities at temperatures which are dependent on the exact composition of the material.

The mixture of lead scandium tantalate and lead zirconate may be calcined at 900°C to 1600°C. Preferably the calcined composition is hot-pressed at a temperature in the range of 900°C to 1600°C to form a ceramic material of required density. The hot-pressed ceramic material may be annealed at a temperature in the range of 900°C to 1600°C. Perferably the hot-pressed material is annealed at 1400°C.

In the drawings:

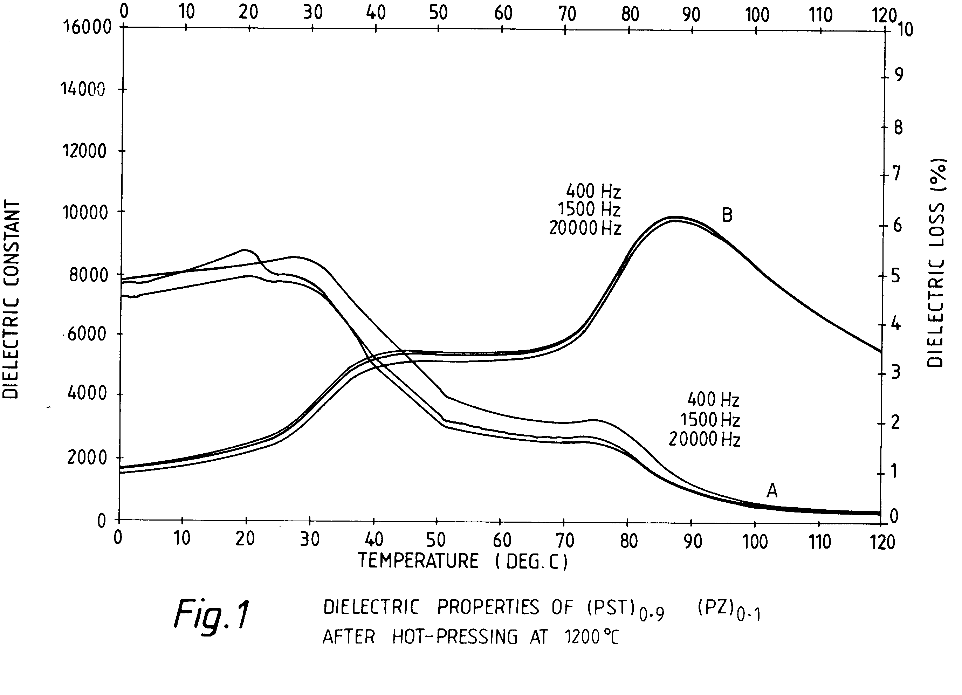

Figure 1 is a graph showing characteristics of ceramic material $(PST)_{0.9}$ $(PZ)_{0.1}$ which is hot-pressed at 1200°C, the curves A showing values of dielectric loss (%) at temperatures from 0°C to 120°C and the curves. B showing values of dielectric constant at temperatures from 0°C to 120°C;

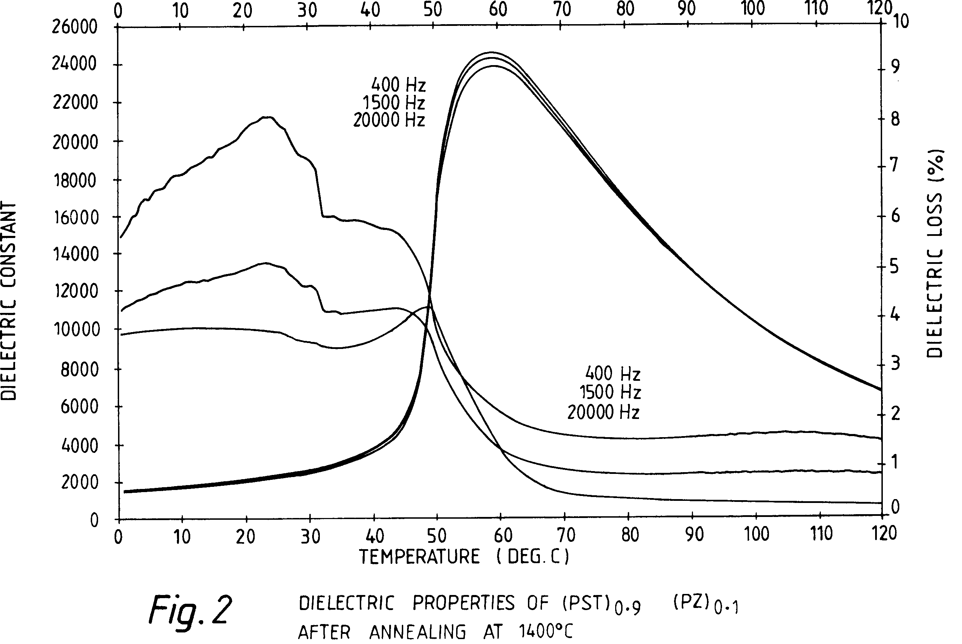

Figure 2 is a graph showing characteristics of hot-pressed ceramic material $(PST)_{0.9}$ $(PZ)_{0.1}$ which is annealed at 1400°C, the curves A showing values of dielectric loss (%) at temperatures 0°C to 120°C and the curves B showing values of dielectric constant of temperatures from 0°C to 120°C;

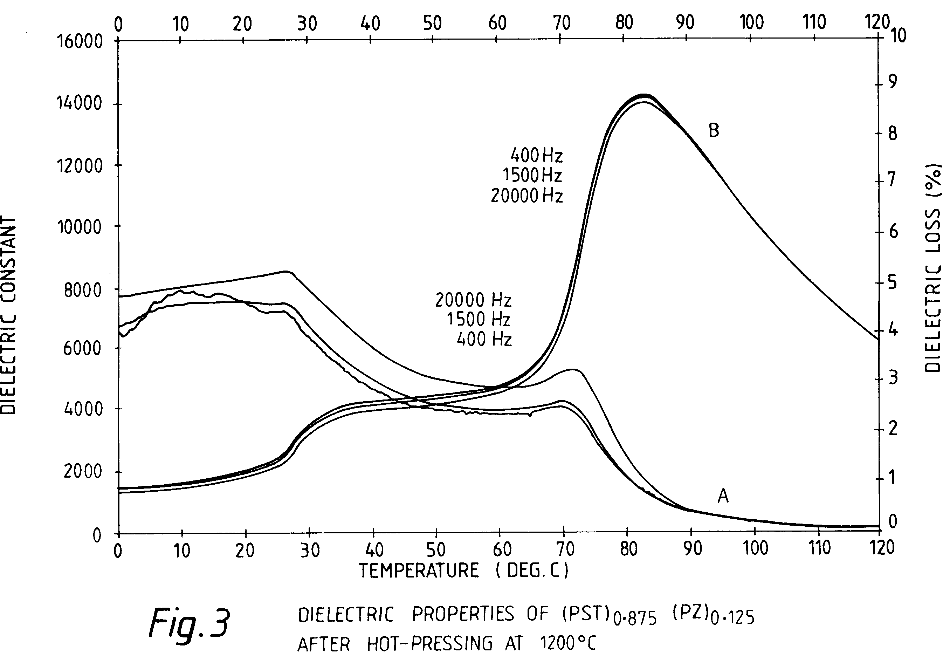

Figure 3 is a graph showing characteristics of ceramic material $(PST)_{0.875}(PZ)_{0.125}$ which has been hot-pressed at 1200°C, the curves A showing values of the dielectric loss (%) at temperatures from 0°C to 120°C, and curves B showing values of dielectric constant at temperatures from 0°C to 120°C;

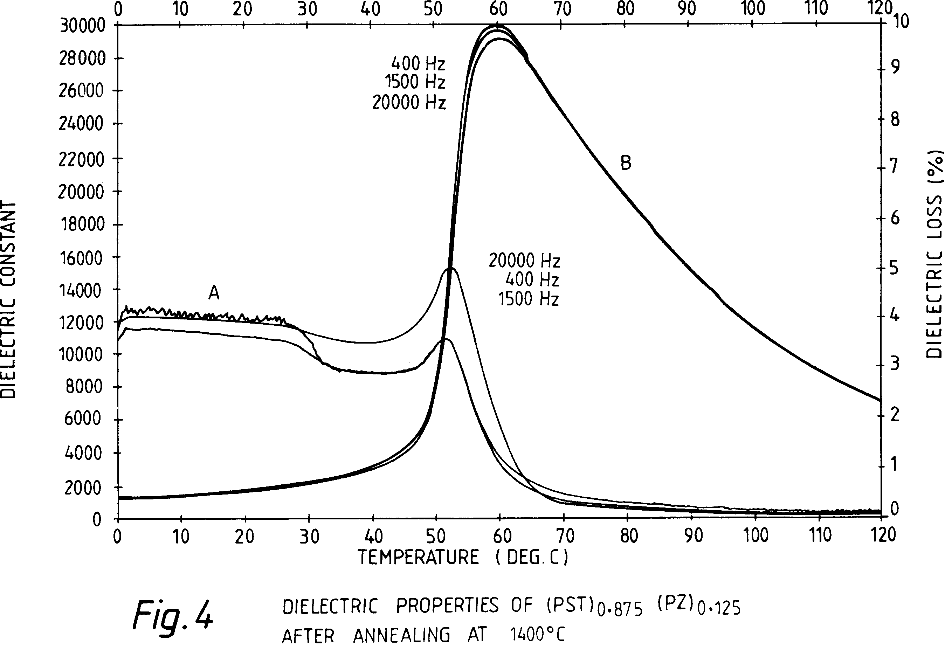

Figure 4 is a graph showing characteristics of hot-pressed ceramic material $(PST)_{0.875}(PZ)_{0.125}$ which has been annealed at 1400°C, the curves A showing values of the dielectric loss (%) at temperatures from 0°C to 120°C, and curves B showing values of dielectric constant at temperatures from 0°C to 120°C;

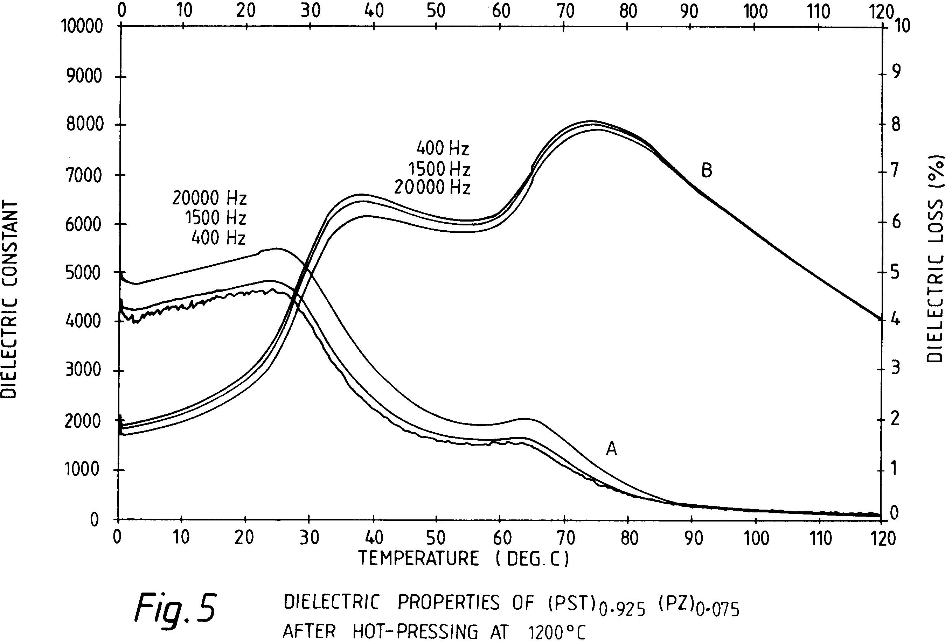

Figure 5 is a graph showing characteristics of ceramic material $(PST)_{0.925}(PZ)_{0.075}$ which has been hot-pressed at 1200°C, the curves A showing values of the dielectric loss (%) at temperatures from 0°C to 120°C, and curves B showing values of dielectric constant at temperatures from 0°C to 120°C;

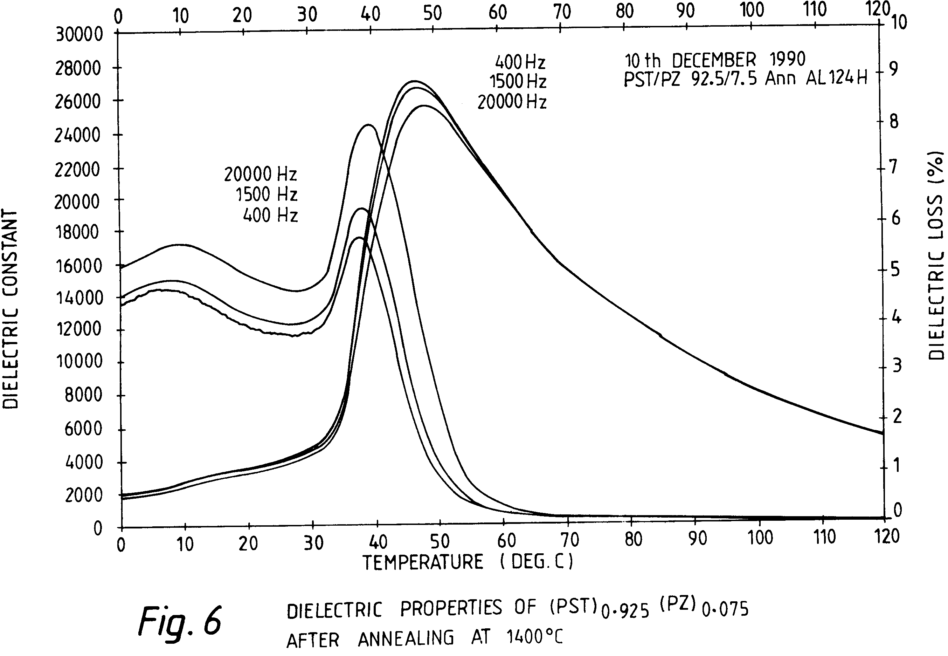

Figure 6 is a graph showing characteristics of hot-pressed ceramic material $(PST)_{0.925}(PZ)_{0.075}$ which has been annealed at 1400°C, the curves A showing values of the dielectric loss (%) at temperatures from 0°C to 120°C, and curves B showing values of dielectric constant at temperatures from 0°C to 120°C; and

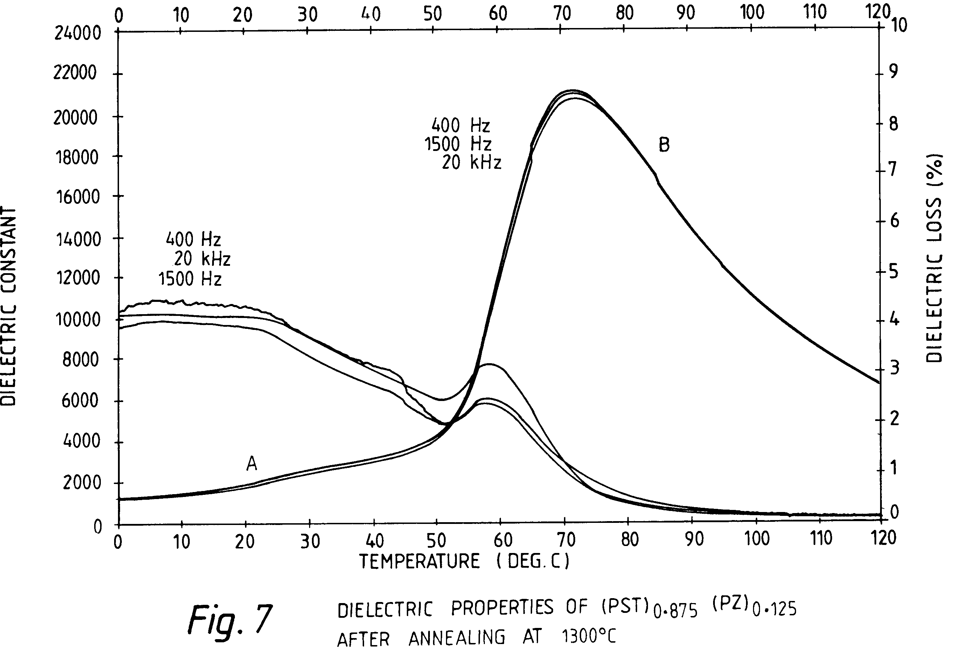

Figure 7 is a graph showing characteristics of hot-pressed ceramic material $(PST)_{0.875}(PZ)_{0.125}$ which has been annealed at 1300°C, the curves A showing values of the dielectric loss (%) at temperatures from 0°C to 120°C, and curves B showing values of dielectric constant at temperatures from 0°C to 120°C.

Undoped polycrystalline lead scandium tantalate (PST) ceramic, which has the single perovskite crystal structure, has a maximum dielectric constant of about $10^4$. This peak in dielectric constant occurs at approximately 25°C (under zero d.c. bias). Above the ferroelectric transition temperature $(T_c)$, the dielectric loss of the material is low, with a typical value of <0.1% at 70°C. The preparation of PST ceramic is usually carried out by the high temperture prereaction of PbO, $Sc_2O_3$ and $Ta_2O_5$ powders. However, if the reaction is carried out in a single stage, unwanted lead tantalate phases are formed; these have low dielectric constants which have a deleterious effect on the performance of the ceramic. To avoid this, the standard 'wolframite' prereaction stage is employed; this involves the reaction of $Sc_2O_3$ with $Ta_2O_5$ powder at 1300°C to 1500°C to form single phase $ScTaO_4$ as an intermediate compound. The $ScTaO_4$ powder can then be reacted with PbO powder, at a much lower temperature to form the single phase PST powder. It is at this stage that the PST powder can be doped via the reaction (calcination) with lead zirconium oxide (PZ) powder. PZ powder is formed by reacting PbO with $ZrO_2$ powder. The calcined powder is ideally hot-pressed at 1200°C to form a high density, low porosity ceramic.

The dielectric properites of the hot-pressed doped PST ceramics are completely different to those of the undoped material. Two peaks in dielectric constant are observed, the lower temperature peak occurs at the $T_c$ for undoped material, whereas the transition temperature for the higher temperature peak is dependent on the dopant level (see Table 1).

| Mole% PbZrO$_3$ | T$_c$(°C) | Maximum Dielectric Constant |
|---|---|---|
| 7.5 | 74 | 8000 |
| 10 | 88 | 10000 |
| 12.5 | 82 | 14200 |

Table 1. Upper transition temperatures (T$_c$) and maximum dielectric constants for as hot-pressed samples of PST ceramic doped with difference levels of PbZrO$_3$.
(Hot-pressing conditions: 1200°C/6 hours/38MPa)

The dielectric properties of the hot-pressed ceramic are not particularly useful for dielectric bolometer applications (see figures 1, 3 and 5). However, when these ceramic materials are annealed at temperatures above 1200°C, the dielectric properties are modified substantially (see figures 2, 4 and 6). Provided that the doping level of PZ is high enough, only a single peak in the dielectric constant and dielectric loss are observed over a wide temperture range. (eg. 0°C-120°C). The T$_c$ of the annealed ceramic is dependent on the ratio of PST to PZ (see Table 2). Hence, the dielectric properties of the doped PST ceramics can be tailored for a specific application.

| Mole% PbZrO$_3$ | T$_c$(°C) | Maximum Dielectric Constant |
|---|---|---|
| 7.5 | 48 | 26400 |
| 10 | 58 | 24200 |
| 12.5 | 60 | 30000 |

Table 2. Transition temperatures (T$_c$) and maximum dielectric constants for annealed samples of PST ceramic doped with different levels of PbZrO$_3$.
(Annealing conditions: 1400°C/4 hours/static air).

If the hot-pressed samples of a particular composition are annealed at a temperature between 1200°C and 1400°C, the dielectric properties (maximum dielectric constant and T$_c$) are found to be dependent on the annealing temperature (see Table 3 and Figure 7).

| Annealing Temperatures (°C) | $T_c$ | Maximum Dielectric Constant |
|---|---|---|
| No Anneal | 89 | 12000 |
| 1200 | 83 | 14000 |
| 1250 | 82 | 15000 |
| 1300 | 72 | 21000 |
| 1400 | 60 | 30000 |

Table 3. Upper transition temperatures ($T_c$) and maximum dielectric constants for $(PST)_{0.875}(PZ)_{0.125}$ annealed for 4 hours at temperatures between 1200°C and 1300°C.

The crystallite (grain) size of these compositions can also be controlled by annealing the material over the above temperature range. For example, the hot-pressed $(PST_{0.875}(PZ)_{0.125}$ material has an average grain size of 1-2$\mu$m. With increase in annealing temperature, the average grain size also increases; a sample which has been annealed at 1400°C for 4 hours will have an average grain size of approximately 15-20$\mu$m.

## Example of Preparation of Ceramic Material of the Present Invention

Lead scandium tantalate ceramic doped with 10 mole % lead zirconate.
The formula for this composition is
$(PbSc_{0.5}Ta_{0.5}O_3)_{0.9}(PbZrO_3)_{0.1}$.

The appropriate quantities of $Sc_2O_3$ and $Ta_2O_5$ powders are ball-milled together for two hours using stabilised zirconia milling balls, and acetone as the milling medium. The slurry is dried in an oven at 60°C and the powder is then calcined in a furnace at 1450°C for two hours. The atmosphere for the calcination stage is static air. When cool, the powder is sieved at 250um and then milled as above for a further two hours. The slurry is then dried, calcined and sieved under identical conditions to the first calcine. At the end of the process, a single phase $ScTaO_4$ powder is formed. The required amount of PbO powder is added to the $ScTaO_4$ and the mixture is then ball-milled for 6 hours. The dried slurry, containing (at this stage) PbO plus $ScTaO_4$, is calcined at 920°C for 3 hours in a static air environment. After cooling, the powder should be single phase PST. The PST powder is finally sieved at 250$\mu$m before addition of the appropriate quantity of lead zirconate powder.

The zirconate powder is processed separately. Suitable amounts of PbO and $ZrO_2$ powder are ball-milled for 4 hours using stabilised zirconia milling balls and acetone as the milling medium. The slurry is dried in an oven at 60°C and the powder is calcined in a furnace at 900°C for 5 hours in a static air atmosphere. When cool, the powder should be single phase $PbZrO_3$.

The mixture of PST and PZ powders are milled for 4 hours in a similar way to that described above. The slurry is dried and the powder calcined at 900°C for 5 hours in a static air atmosphere. When cool, the powder with the composition $(PST)_{0.9}(PZ)_{0.1}$, has an organic binder added to it to aid cold-pressing into a block.

The powder is cold-pressed in a steel die at a pressure of 154MPa. The cold-pressed sample is removed from the die and heated slowly up to 500°C to remove the organic binder. The sample is then hot-pressed to almost its theoretical density using a pressing temperature and pressure of 1200°C and 38MPa respectively. In producing the ceramic material embodying the invention, excess PbO is used in processing of said material so as to compensate for loss of PbO during processing of said material. Preferably 5% excess PbO is used.

The dielectric constant and dielectric loss of the hot-pressed ceramic, measured at 400Hz, 1.5kHz and 20kHz, are shown in figure 1 as a function of temperature. When this ceramic is annealed at 1400°C in static air for 4 hours, the dielectric properties change to those shown in figure 2. Owing to the high vapour pressure of PbO at 1400°C, the sample has to be surrounded by an atmosphere control powder, such as lead zirconate, in a double crucible arrangement. (The sample is positioned inside the inner alumina crucible which in turn is placed in a larger alumina crucible, the lead zirconate powder is placed between these two containers).

## Claims

1. A ceramic material having a composition:
$$(PbSc_{0.5}Ta_{0.5}O_3)_{100-x}(PbZrO_3)_x$$
wherein x is greater than 0 mole % and less than 20 mole %.

2. A ceramic material having a composition:
$$(PbSc_{0.5}Ta_{0.5}O_3)_{0.9}(PbZrO_3)_{0.1}$$

3. A ceramic material as claimed in Claim 1 or 2, in which the material is annealed at a temperature in the range of 900°C to 1600°C.

4. A ceramic material as claimed in Claim 4, in which the material is annealed at 1400°C.

5. A method of producing a ceramic material as claimed in Claim 1, the method comprising producing a mixture of predetermined quantities of $(PbSc_{0.5}Ta_{0.5}O_3)$ and $PbZrO_3$) and calcining the mixture to form said composition.

6. A method as claimed in Claim 5, in which said mixture is calcined at a temperature in the range of 900°C to 1600°C.

7. A method as claimed in Claim 5 or 6, in which said calcined composition is hot-pressed at a temperature in the range of 900°C to 1600°C to form said ceramic material of required density.

8. A method as claimed in Claim 7, in which said hot-pressed ceramic material is annealed at a temperature in the range of 900°C to 1600 °C.

9. A method as claimed in Claim 8 in which said hot-pressed ceramic material is annealed at 1400°C.

10. A method as claimed in any one of claims 5 to 9, in which said lead scandium tantalate $(PbSc_{0.5}Ta_{0.5}O_3)$ is formed by providing a mixture of predetermined quantities of scandium oxide and tantalum oxide, calcining the mixture to form $ScTaO_4$, adding lead oxide to $ScTaO_4$ and calcining the mixture of $ScTaO_4$ and lead oxide to form said lead scandium tantalate.

11. A method as claimed in any one of Claims 5 to 10, in which said lead zirconate is formed by providing a mixture of predetermined quantities of PbO and $ZrO_2$ and calcining the mixture to form lead zirconate.

12. A method as claimed in any of Claims 5 to 11, in which excess PbO is used in said mixture to compensate for loss of lead oxide during processing of said material.

13. A method as claimed in Claim 12, in which 5% excess PbO is used.

Fig.1     DIELECTRIC PROPERTIES OF (PST)$_{0.9}$     (PZ)$_{0.1}$
          AFTER HOT-PRESSING AT 1200°C

EP 0 488 521 A1

Fig.2   DIELECTRIC PROPERTIES OF $(PST)_{0.9}$ $(PZ)_{0.1}$
AFTER ANNEALING AT 1400°C

Fig.3 DIELECTRIC PROPERTIES OF (PST)$_{0.875}$ (PZ)$_{0.125}$
AFTER HOT-PRESSING AT 1200°C

EP 0 488 521 A1

*Fig.4* DIELECTRIC PROPERTIES OF $(PST)_{0.875}$ $(PZ)_{0.125}$ AFTER ANNEALING AT 1400°C

Fig. 5

DIELECTRIC PROPERTIES OF $(PST)_{0.925}$ $(PZ)_{0.075}$ AFTER HOT-PRESSING AT 1200°C

Fig. 6    DIELECTRIC PROPERTIES OF $(PST)_{0.925}$ $(PZ)_{0.075}$
AFTER ANNEALING AT 1400°C

Fig. 7   DIELECTRIC PROPERTIES OF $(PST)_{0.875}$ $(PZ)_{0.125}$
AFTER ANNEALING AT 1300°C

EP 0 488 521 A1

European Patent Office

## EUROPEAN SEARCH REPORT

Application Number

EP 91 30 9868

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 183 628 (MITSUBISHI MINING AND CEMENT CO., LTD.) 10 June 1987 <br> * the whole document * <br> --- | 1-6, 10-13 | C04B35/00 <br> H01B3/12 <br> H01G4/12 |
| A | WO-A-8 910 335 (PLESSEY OVERSEAS LTD.) <br><br> * claims 1-4 * <br> --- | 1-6, 10-13 | |
| A | US-A-4 121 941 (MATSUSHITA ELECTRIC IND. CO., LTD.) 24 October 1978 <br> * the whole document * <br> ----- | 1,5-9 | |
| | | | TECHNICAL FIELDS SEARCHED (Int. Cl.5) <br><br> C04B <br> H01G |

The present search report has been drawn up for all claims

| Place of search | Date of completion of the search | Examiner |
|---|---|---|
| THE HAGUE | 02 MARCH 1992 | LUETHE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)

13